Europäisches Patentamt

European Patent Office

Office européen des brevets

(11) Veröffentlichungsnummer: **0 179 163**
**A1**

# EUROPÄISCHE PATENTANMELDUNG

(21) Anmeldenummer: **84112743.4**

(22) Anmeldetag: **23.10.84**

(51) Int. Cl.⁴: **C 01 B 7/09**
**B 01 J 23/22**

(43) Veröffentlichungstag der Anmeldung:
**30.04.86** Patentblatt **86/18**

(84) Benannte Vertragsstaaten:
**BE DE FR GB IT NL**

(71) Anmelder: **Chemische Fabrik Kalk GmbH**
**Kalker Hauptstrasse 22 Postfach 91 01 57**
**D-5000 Köln 91(DE)**

(72) Erfinder: **Eisenhauer, Gerhard, Dr.**
**Roonstrasse 81**
**D-4150 Krefeld(DE)**

(72) Erfinder: **Strang, Robert**
**Mattlenerweg 9**
**D-5000 Köln 71(DE)**

(72) Erfinder: **Amm, Arno**
**Hauptstrasse 5**
**D-5270 Gummersbach(DE)**

(54) Verfahren zur Herstellung von Brom durch katalytische Oxidation von Bromwasserstoff.

(57) Die Erfindung betrifft ein Verfahren zur Herstellung von Brom durch katalytische Oxidation von Bromwasserstoff, der mit einem halogenierten Lösemittel verunreinigt sein kann. Über einen Vanadiumpentoxid-Katalysator auf einem Aluminiumoxidträger wird bei einer Temperatur von 200-600°C, vorzugsweise 400-500°C, ein Gasgemisch aus Bromwasserstoff und Sauerstoff u./o. einem sauerstoffhaltigen Gas geleitet. Aus dem entstehenden Brom/Wasser-Gemisch wird das Brom in an sich bekannter Weise abgetrennt.

EP 0 179 163 A1

Bei der substituierenden Bromierung aromatischer Kohlenwasserstoffe müssen bei Verwendung von elementarem Brom
als Bromierungsmittel pro auszutauschender Wasserstoffatome zwei Atome Brom eingesetzt werden, von denen eines
zu Bromwasserstoff reagiert und damit der substituierenden Bromierung verloren ist. Es sind deshalb zahlreiche
Verfahren bekannt geworden, nach denen das in diesem Bromwasserstoff enthaltene Brom wieder freigesetzt werden kann.

Bekanntlich läßt sich Bromwasserstoff mit Chlorgas zu Brom
oxidieren. Bei dieser Arbeitsweise fällt jedoch das Brom
stets verunreinigt mit Chlor an, das auch nach aufwendigen
Reinigungsverfahren nicht restlos aus dem Brom zu entfernen ist, so daß dieses verunreinigte Brom zur Wiederverwendung nur bedingt einsetzbar ist.

Der bei Bromierungsreaktionen entstehende und in einer Wasservorlage aufgefangene Bromwasserstoff kann nach einem in
der DE-PS 27 13 345 beschriebenen Verfahren mit Wasserstoffperoxid und Alkalibromat zu reinem Brom oxidiert werden,
das aus dem wäßrigen Medium durch Destillation erhalten wird.
Obgleich das Brom hierbei in hohen Ausbeuten und sehr reiner
Form erhalten wird, ist diese zweistufige Verfahrensweise
technisch sehr aufwendig.

Nach einem in der DE-AS 15 67 854 beschriebenen Verfahren
wird Bromwasserstoff zusammen mit einem sauerstoffhaltigen
Gas über einen Katalysator aus Kupfer- u./o. Ceroxid geleitet, der sich auf einem aus Zirkonoxid oder Tonerde bestehenden inerten Metalloxidträger befindet. Das dabei entstehende Brom wird bei Temperaturen von 300-600°C in nahezu
quantitativer Ausbeute erhalten.

Bei Bromierungsreaktionen, die in organischen Lösemitteln
durchgeführt werden, ist es in der Praxis auch bei guter
Kühlung nicht auszuschließen, daß mit dem abziehenden
Bromwasserstoff geringe Mengen dieser Lösemittel, wie beispielsweise halogenierte Kohlenwasserstoffe, mitgerissen
werden. Dem Bromwasserstoff, der in situ durch katalytische Oxidation zu elementarem Brom umgewandelt werden soll,
haften demnach geringe Lösemittelreste an, die die Wirksamkeit des Katalysators bei längerem Gebrauch vermindern
könnten.

Aufgabe der Erfindung war es, ein Verfahren zur katalytischen Oxidation von Bromwasserstoff zur Rückgewinnung von
Brom mit Sauerstoff u./o. einem sauerstoffhaltigen Gas zu
finden, wobei auch verunreinigende Bestandteile an Lösemitteln, wie beispielsweise halogenierte Kohlenwasserstoffe,
die in dem Bromwasserstoff enthalten sind, den Katalysator
nicht in seiner Wirksamkeit beeinflussen.

Gegenstand der Erfindung ist ein Verfahren zur Herstellung
von Brom aus Bromwasserstoff durch katalytische Oxidation
von Bromwasserstoff, der mit halogeniertem Lösemittel verunreinigt sein kann, mit Sauerstoff u./o. einem sauerstoffhaltigen Gas bei erhöhter Temperatur an einem aus Oxiden
mehrwertiger Metalle bestehendem Katalysator auf einem inerten Trägeroxid und Abtrennen des Broms aus dem Reaktionsgemisch. Das Verfahren ist dadurch gekennzeichnet, daß als
Katalysator Vanadiumpentoxid auf einem Aluminiumoxidträger
verwendet wird. Es hat sich als Vorteil erwiesen, einen Katalysator zu verwenden, der 5 bis 15 Gew%, vorzugsweise
10 Gew%, Vanadiumpentoxid auf einem Aluminiumoxidträger
enthält und der als poröses Granulat eine Korngröße von 0,5
bis 5 mm hat. Vorteilhaft wird die Oxidation bei Temperaturen von 200-600°C, vorzugsweise 400-500°C, durchgeführt.

Zur Durchführung des Verfahrens wird der Katalysator, der
vorzugsweise 10 Gew% Vanadiumpentoxid auf einem Aluminiumoxidträger enthält, in ein geeignetes Rohr eingebracht und
in einem Röhrenofen auf eine Temperatur von 200-400°C erhitzt. Bei Atmosphärendruck oder leichtem Überdruck wird
ein Bromwasserstoff/Luft- oder Bromwasserstoff/Sauerstoff-
gemisch über das Katalysatorbett geleitet. Der Anteil Sauerstoff aus Luft oder reinem Sauerstoff ist so zu bemessen,
daß der mit dem Bromwasserstoff in einem molaren Verhältnis von etwa 1 : 0,25 bis 0,3 steht. In der Hauptreaktionszone ergeben sich bei dem Oxidationsvorgang Reaktionstemperaturen von 300-600°C. Bei einer Raumgeschwindigkeit von
etwa 1200 Raumteilen/h Gasgemisch errechnen sich beispielsweise bei einer Temperatur von 250°C Verweilzeiten von 2,5
bis 3,6 sec. an der Berührungsfläche des Katalysators. Obgleich der verwendete Bromwasserstoff mit einem Gewichtsanteil von etwa 1-8 Gew% an mitgerissenem Lösemittel verunreinigt ist, verliert der Katalysator über längere Betriebsdauer seine Wirksamkeit nicht. Es wurde festgestellt,
daß ein Wechsel des Katalysators auch nach 250-stündigem
Betrieb noch nicht erforderlich war. Der Umsatz des Bromwasserstoffs ist praktisch 100%ig. Das entstandene Brom/
Wasser-Gemisch wird nach dem Durchgang in an sich bekannter
Weise kondensiert. Das Brom kann nach Abtrennung der wäßrigen Schicht in bekannter Weise getrocknet und für Bromierungsreaktionen wieder verwendet werden.

Mit den nachfolgenden Beispielen soll das erfindungsgemäße
Verfahren näher erläutert werden.

0179163

**Beispiel 1**

In einem Glasrohr mit einem Durchmesser von 45 mm und 600 mm Länge werden 600 Gewichtsteile (GT) Vanadiumpentoxid-Katalysator mit einem $V_2O_5$-Gehalt von 10 Gew% auf Aluminiumoxid eingefüllt und in einem Röhrenofen auf eine Temperatur von 250°C erhitzt. Über das Katalysatorbett wird ein Gemisch von 160 GT Bromwasserstoff/h und 75 Volumenteile (VT) Luft/h geleitet. In der Hauptreaktionszone wird eine Reaktionstemperatur von 300°C gemessen. Aus dem austretenden Gasstrom werden Brom, Wasser und gegebenenfalls geringe Reste Bromwasserstoff durch Tiefkühlung kondensiert. Geringe Mengen an Bromdämpfen bzw. Bromwasserstoff werden in wäßriger Alkalilösung aufgefangen. Die Ausbeute an Brom beträgt 157,7 GT/h, entsprechend einem HBr-Umsatz von 99,8 %.

**Beispiel 2**

Analog dem Beispiel 1 werden bei einer Ofentemperatur von 250°C ein Gemisch von 160 GT Bromwasserstoff/h, 25 VT Sauerstoff/h und 12 VT Luft/h über den Katalysator geleitet. In der Hauptreaktionszone wird eine Temperatur von 440°C gemssen. Die Ausbeute an Brom beträgt 157,7 GT/h, entsprechend einem HBr-Umsatz von 99,8 %.

**Beispiel 3**

Analog den vorangehenden Beispielen werden bei einer Ofentemperatur von 250°C über einen Zeitraum von 37 Stunden 131 GT Bromwasserstoff/h, 12 VT Sauerstoff/h und 12 VT Luft/h über den gleichen Katalysator geleitet. In der Hauptreaktionszone wird eine Temperatur von 430°C gemessen. Die Ausbeute an Brom beträgt nach 37 Stunden 4784 GT und 3 GT analytisch nachgewiesenem Bromwasserstoff. Der HBr-Umsatz beträgt somit 99.94 %

Zusammenstellung der Versuche

| Ans.-Nr. | HBr/h GT | Luft/h VT | $O_2$/h VT | Reakt.-Temp. °C | Verweilzeit bei Reakt.-Temp/sec | Umsatz HBr % |
|---|---|---|---|---|---|---|
| 1 | 160 | 75 | - | 300 | 2,6 | 99,8 |
| 2 | 160 | 12 | 25 | 440 | 3,1 | 99,8 |
| 3 | 131 | 12 | 12 | 430 | 4,3 | 99,94 |

- 1 -

0179163

## Patentansprüche

1. Verfahren zur Herstellung von Brom aus Bromwasserstoff durch katalytische Oxidation von Bromwasserstoff, der mit halogeniertem Lösemittel verunreinigt sein kann, mit Sauerstoff u./o. einem sauerstoffhaltigen Gas bei erhöhter Temperatur an einem
   Katalysator aus Oxiden von mehrwertigen Metallen
   auf einem inerten Trägeroxid und Abtrennen des Broms
   aus dem Reaktionsgemisch, <u>dadurch gekennzeichnet</u>,
   daß als Katalysator Vanadiumpentoxid auf einem Aluminiumoxidträger verwendet wird.

2. Verfahren nach Anspruch 1, <u>dadurch gekennzeichnet</u>,
   daß der Katalysator 5 bis 15 Gew% Vanadiumpentoxid,
   vorzugsweise 10 Gew% Vanadiumpentoxid, auf einem
   Aluminiumoxidträger enthält und als poröses Granulat eine Korngröße von 0,5-5 mm hat.

3. Verfahren nach Ansprüchen 1 und 2, <u>dadurch gekenn-
   zeichnet</u>, daß die Oxidation des Bromwasserstoffs
   bei einer Temperatur von 200-600°C, vorzugsweise
   400-500°C, durchgeführt wird.

**Europäisches Patentamt**

**EUROPÄISCHER RECHERCHENBERICHT**

**0179163**
Nummer der Anmeldung

EP 84 11 2743

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 450 674 (KALI CHEMIE)<br>* Seite 1, rechte Spalte, Zeilen 22-34; Zusammenfassung, Punkte 1,2b * | 1 | C 01 B 7/09<br>B 01 J 23/22 |
| Y | FR-A-1 562 292 (SHELL INTERNATIONALE RESEARCH)<br>* Seite 3, rechte Spalte, Zeilen 51-60; Seite 5, Patentanspruch 1 * | 1 | |
| A | CHEMICAL ABSTRACTS, Band 90, Nr. 18, April 1979, Seite 107, Nr. 139701f, Columbus, Ohio, US; & JP - A - 78 124 190 (BATTELLE MEMORIAL INSTITUTE) 30.10.1978 | | |
| A | US-A-3 705 010 (DAVIS et al.) | | |

---

RECHERCHIERTE SACHGEBIETE (Int. Cl. ³)

C 01 B
B 01 J

Der vorliegende Recherchenbericht wurde für alle Patentansprüche erstellt.

| Recherchenort | Abschlußdatum der Recherche | Prüfer |
|---|---|---|
| DEN HAAG | 06-05-1985 | VAN BELLINGEN I. |